# EUROPEAN PATENT APPLICATION

(11) **EP 4 838 081 A1**
(43) Date of publication of application: **11.11.2026**
(21) Application number: 26176161.3
(22) Date of filing: 04.05.2026
(51) Int. Cl.: F02M 35/08, B60K 13/02, F02M 35/10, F02M 35/16

(54) **COMMERCIAL MOTOR VEHICLE COMPRISING A FRONT AIR INTAKE ASSEMBLY**

(30) Priority: 06.05.2025 NL 2040311
(71) Applicant: DAF Trucks N.V., 5643 TW Eindhoven (NL)
(72) Inventor: BATEN, Gerardus Theodorus Godefridus, 5643 TW Eindhoven (NL); SABERI, Josef, 5643 TW Eindhoven (NL)
(74) Representative: V.O.

(57) **Abstract**

Commercial motor vehicle (1) comprising an air intake (2) in horizontal direction spaced from a center of the front of the vehicle, and an intake air inlet duct (4) for supplying intake air from the air intake to an air filter assembly. An air inlet duct opening (5) is positioned between a fire wall (3) and the air intake (2). The air intake comprises curved guiding elements (6) configured to direct air towards the fire wall and away from the intake air inlet duct opening. A plurality of elongated vanes (7) is arranged in an array unit (8) in front of the guiding elements. The vanes (7) are arranged parallel to one another and are oriented diagonally relative to the vertical direction such that the lower end of each vane is closer to the center of the vehicle's front than its upper end, thereby guiding air upwards and outwards relative to the center of the vehicle's front.

## Description

The invention relates to a commercial motor vehicle comprising:
- an internal combustion engine;
- an air filter assembly;
- an air intake positioned at the front of the commercial motor vehicle as seen in the normal direction of travel, the air intake being spaced from a center of the front of the commercial motor vehicle when seen in horizontal direction transverse to the normal direction of travel;
- a fire wall extending in a vertical direction transverse to direction of travel and the horizontal direction, said fire wall being spaced from and behind the air intake as seen in the normal direction of travel;
- an intake air inlet duct for supplying intake air from the air intake to the air filter assembly along an air intake flow direction, the internal combustion engine being provided downstream of the air filter assembly when seen in the air intake flow direction; the intake air inlet duct having an intake air inlet duct opening, said air inlet duct opening being positioned in the space between the fire wall and the air intake, wherein the air intake comprises curved intake air guiding elements arranged for guiding the intake air towards the fire wall in a direction at least substantially away from the intake air inlet duct opening.

Such a commercial motor vehicle is for example known from EP3894252A. As is known in the art the presence of water or moisture in the intake air supplied to an internal combustion engine can have a negative effect of the performance of the internal combustion engine. Although during operation of the known commercial motor vehicle, in particular during rainfall, moisture and water is removed from the intake air to a substantial amount, there is still a need in the field to further reduce the amount of moisture and/or water from the intake air to further improve the performance of the internal combustion engine.

It is one of the objects of the invention to fulfil this need.

According to the invention this object is obtained by commercial motor vehicle comprising:
- an internal combustion engine;
- an air filter assembly;
- an air intake positioned at the front of the commercial motor vehicle as seen in the normal direction of travel, the air intake being spaced from a center of the front of the commercial motor vehicle when seen in horizontal direction transverse to the normal direction of travel;
- a fire wall extending in a vertical direction transverse to direction of travel and the horizontal direction, said fire wall being spaced from and behind the air intake as seen in the normal direction of travel;
- an intake air inlet duct for supplying intake air from the air intake to the air filter assembly along an air intake flow direction, the internal combustion engine being provided downstream of the air filter assembly when seen in the air intake flow direction; the intake air inlet duct having an intake air inlet duct opening, said air inlet duct opening being positioned in the space between the fire wall and the air intake, wherein the air intake comprises curved intake air guiding elements arranged for guiding the intake air towards the fire wall in a direction at least substantially away from the intake air inlet duct opening, characterized in that a plurality of elongated vanes is arranged in an array unit in front of the curved intake air guiding elements as seen in the normal direction of travel, the elongated vanes of the plurality of elongated vanes being configured to be spaced from and arranged parallel to one another in the array unit, and wherein each of the plurality of elongated vanes is elongated in a direction of elongation, which direction of elongation is arranged diagonally under an angle (β) with regard to the vertical direction, so that a lower end of each of the plurality of elongated vanes is positioned closer to the center of the front of the commercial motor vehicle than an upper end thereof for guiding intake air along the elongated vanes upwards and in outward direction with regard to the center of the front of the commercial motor vehicle. Due to the plurality of elongated vanes positioned under the angle (β) with regard to the vertical direction, during operation of the known commercial motor vehicle, in particular during rainfall, rain droplets impacting on the outer surface of the elongated vanes are propelled by the shear forces of the air flow originating from the forward travel of the commercial motor vehicle along the elongated vanes upwards and in outward direction with regard to the center of the front of the commercial motor vehicle and can also bounce from one elongated vane to the next one as seen in outward direction. Thus much less water and moisture enters the space behind the air intake and remaining water and moisture is further removed from the intake air by the curved intake air guiding elements. Consequently moisture and water is at least substantially removed from the intake air.

In an embodiment of a commercial vehicle according to the invention the array unit comprises a water gutter at an upper edge thereof, so that at least a part of the intake air is guided by the plurality of elongated vanes towards the water gutter. Due to the water gutter rain droplets are more effectively transported to the outside of the commercial vehicle. Preferably the array unit only comprises the plurality of elongated vanes held together by a frame or in case a water gutter is present, only comprises the plurality of elongated vanes held together by a frame and the water gutter.

In an embodiment of a commercial motor vehicle according to the invention - seen in a cross section in a plane defined by the direction of travel and the horizontal direction - each of the plurality of elongated vanes has a leading edge positioned further from the center of the front of the commercial motor vehicle than a trailing edge thereof for guiding intake air towards the curved intake air guiding elements, so that - seen in a cross section in a plane defined by the direction of travel and the horizontal direction - each of the plurality of elongated vanes is arranged under an angle (α) with regard to the direction of travel. In this manner a centrifugal force is created at the air intake, in particular between the plurality of elongated vanes and the curved intake air guiding elements, causing water droplets to move in the opposite direction of the air intake flow direction towards the fire wall, thereby removing water and moisture from the intake air before it enters the intake air inlet duct opening.

In a further embodiment of a commercial motor vehicle according to the invention each of the plurality of elongated vanes is formed by a plate having substantially flat, straight surfaces. Such elongated vanes can be produced in a relatively simple manner, and extend substantially in the same direction as water droplets are propelled from the center of the front of the commercial motor vehicle upwards and towards the outward sides thereof during driving, thereby providing little friction to the water droplets as a result of which they are transported very efficiently to the water gutter.

In a still further embodiment of a commercial vehicle according to the invention - as seen in a direction from the center of the front of the commercial motor vehicle upward and outward along a surface of the front of the commercial motor vehicle - the plurality of elongated vanes covers the apparent surface of the array unit. In this manner the flow lines of the air impinging on the front of the commercial motor vehicle and deflected upwards and outwards during driving, do not have a direct line of sight into the inside of the commercial motor vehicle (i.e. the space between the plurality of elongated vanes and the curved intake air guiding elements), as a result of which the number of water droplets passing through the plurality of elongated vanes into the inside of the commercial motor vehicle is decreased.

In another embodiment of a commercial vehicle according to the invention each of the plurality of elongated vanes has an angled edge at the leading edge thereof, the angled edge being arranged to be in line with a surface of the front of the commercial motor vehicle. By the angled edge water droplets clinging to a front surface of an elongated vane are even less likely to be transferred to the back surface of the elongated vane, thereby further preventing water droplets to enter the inside of the commercial motor vehicle. Preferably, the angle (β) with regard to the vertical direction (z) has a value of between 30 and 45 degrees and the angle (α) with regard to the direction of travel (x) has a value between 35 and 55 degrees. It has appeared that with regard to the most common shape of the front surface of the front of present-day commercial motor vehicles these ranges provide a satisfactory reduction of moisture and water entering the air filter assembly.

The invention will be further explained with reference to the Figures, in which non-limiting exemplary embodiments of a commercial motor vehicle according to the invention are shown:
Figure 1 schematically shows an embodiment of a commercial motor vehicle according to the invention in front view;
Figures 2 and 4 in an enlarged view schematically show a portion of the embodiment of the commercial motor vehicle shown in Fig. 1, depicting the plurality of elongated vanes arranged in the array unit in front of the curved intake air guiding elements, in perspective as seen from the front; and
Figure 3 schematically shows in horizontal cross section part of the commercial motor vehicle shown in Fig. 1 indicating the air intake, and the plurality of elongated vanes arranged in the array unit in front of the curved intake air guiding elements.

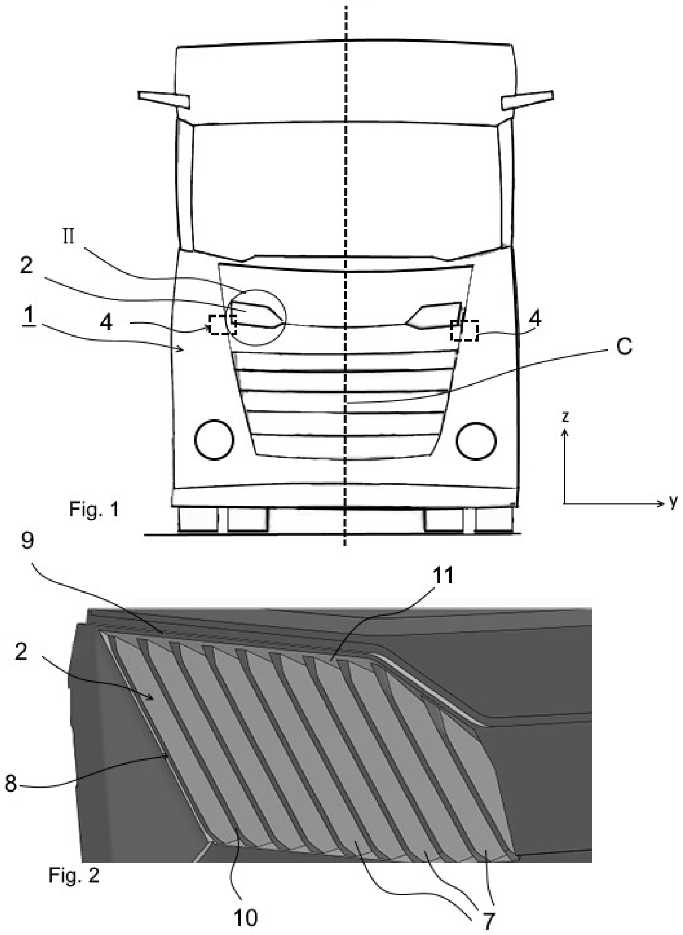

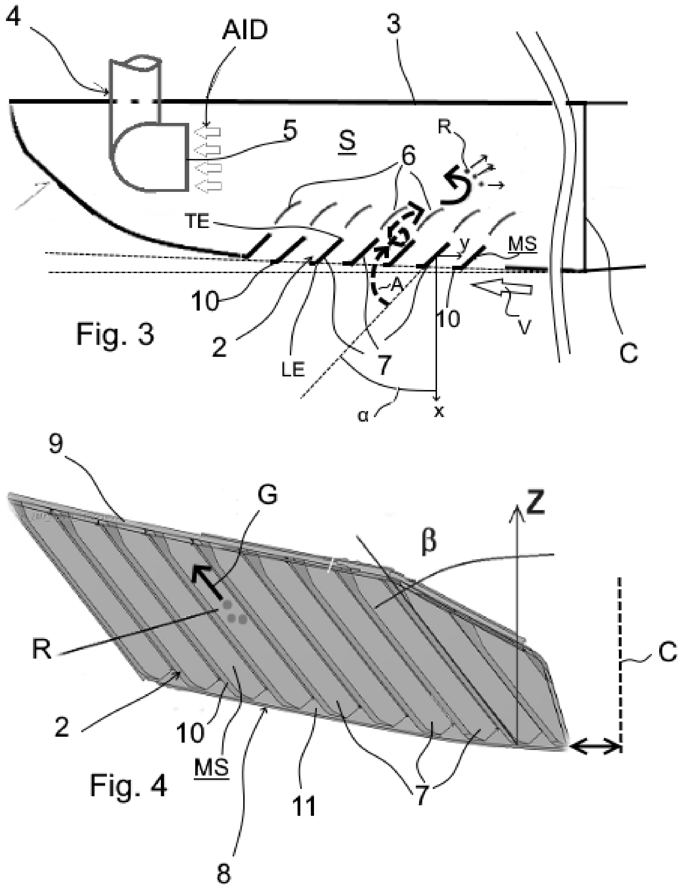

In Figure 1 schematically shows an embodiment of a commercial motor vehicle 1 according to the invention. The commercial motor vehicle 1 comprises an internal combustion engine, an air filter assembly and a driver cabin positioned at the front of the commercial motor vehicle 1 as seen in the normal direction of travel x (indicated in Fig. 3). The commercial motor vehicle 1 has an air intake 2 at the front of the commercial motor vehicle 1. The air intake 2 being spaced from a center C of the front of the commercial motor vehicle when seen in horizontal direction y transverse to the normal direction x of travel. The commercial motor vehicle 1 further comprises a fire wall 3 (see Fig. 3) extending in a vertical direction z transverse to direction of travel x. The fire wall 3 is spaced behind the air intake 2 as seen in the direction of travel x (indicated in Fig. 3). As commercial motor vehicles comprising an internal combustion engine, an air filter assembly, a driver cabin, an air intake and a fire wall are generally known, the present specification in the following only provides a more detailed description of the components relevant for the present invention.

In the embodiment shown in Figures 1 and 3 the commercial motor vehicle 1 comprises an intake air inlet duct 4 for supplying intake air from the air intake 2 to the air filter assembly along an air intake flow direction AID. As usual, the internal combustion engine is provided downstream of the air filter assembly when seen in the air intake flow direction AID.

The intake air inlet duct 4 has an intake air inlet duct opening 5 positioned in the space S between the fire wall and the air intake 2. The air intake 2 comprises curved intake air guiding elements 6 arranged for guiding the intake air towards the fire wall 3 in a direction at least substantially away from the intake air inlet duct opening 5.

According to the invention, and as shown in Figures 2 to 4, a plurality of elongated vanes 7 is arranged in an array unit 8 in front of the curved intake air guiding elements 6 as seen in the normal direction of travel x. The elongated vanes 7 of the plurality of elongated vanes are held together by a frame 11 and are configured to be spaced from and arranged parallel to one another in the array unit 8 for allowing air to enter in the space S between the air intake 2 and the fire wall 3. In the embodiment shown, the array unit 8 comprises a water gutter 9 at an upper edge thereof, although the invention is not restricted to array units having a water gutter. As indicated in Figure 4 each of the plurality of elongated vanes 7 is elongated in a direction of elongation, which direction of elongation is arranged diagonally under an angle β with regard to the vertical direction z. Thus, a lower end of each of the plurality of elongated vanes 7 is positioned closer to the center C of the front of the commercial motor vehicle 1 than an upper end thereof. In this manner during operation, i.e. during driving and during rainfall, of the commercial motor vehicle 1, rain droplets R impacting on the outer surface of the elongated vanes 7 are propelled, as indicated by the arrow G, by the shear forces of the air flow originating from the forward travel of the commercial motor vehicle 1 towards the water gutter 9 at the upper edge of the array unit 8 and thus are prevented from entering in the space S behind the air intake.

In the embodiment shown in the Figures each of the plurality of elongated vanes 7 is formed by a plate having substantially flat, straight surfaces. The straight elongated vanes 7 then extend substantially in the same direction as water droplets R are propelled from the center C of the front of the commercial motor vehicle 1 upwards and towards the outward sides thereof during driving, thereby providing little friction to the water droplets R as a result of which they are transported very efficiently to the water gutter 9. Each of the plurality of elongated vanes 7 has an angled edge 10 at the leading edge thereof. The angled edges 10 of the elongated vanes 7 are arranged so as to be in line or flush with a surface of the front of the commercial motor vehicle 1. Since the shape of the surface of the front of the commercial motor vehicle 1 can vary from one brand to another and from one type of commercial motor vehicle to another, the orientation of the angled edge 10 with regard to the straight flat main surface MS of the elongated vanes 7 varies accordingly. Due to the angled edge 10 water droplets R clinging to a front surface of an elongated vane 7 are even less likely to be transferred to the back surface of the elongated vane 7, thereby further preventing water droplets R to enter space S of the commercial motor vehicle 1.

As in particular visible in Fig. 3 - seen in a cross section in a plane defined by the direction of travel x and the horizontal direction y - each of the plurality of elongated vanes 7 has a leading edge LE positioned further from the center C of the front of the commercial motor vehicle 1 than a trailing edge TE thereof. Since the leading edge LE of an elongated vane 7 is positioned further from the center C of the front of the commercial motor vehicle 1 than the trailing edge TE thereof - seen in a cross section in a plane defined by the direction of travel x and the horizontal direction y (depicted in Fig. 3) - each of the plurality of elongated vanes 7 is arranged under an angle α with regard to the horizontal direction y. This arrangement ensures that intake air is guided towards the curved intake air guiding elements 6 as indicated by the arrow A. Due to the arrangement of the plurality of elongated vanes 7 in front of the curved intake air guiding elements 6 the intake air enters the space S in a swirling manner, thereby experiencing a centrifugal force causing water droplets to move in the opposite direction of the air intake flow direction towards the fire wall 3, thereby removing water and moisture from the intake air before it enters the intake air inlet duct opening 5.

In the shown embodiment, the angle β with regard to the vertical direction z has a value of 38 degrees and the angle α has a value of 44 degrees with regard to the direction of travel x. However, in dependence of the shape of the front surface of the front of the commercial motor vehicle the value of the angles can vary, but preferably the value of the angle β is within the range of 30 - 45 degrees and the value of the angle α is within the range of 35 - 55 degrees.

As seen in a direction from the center C of the front of the commercial motor vehicle 1 upward and outward along a surface of the front of the commercial motor vehicle 1, as indicated by the arrow angle V, the plurality of elongated vanes 7 are arranged to cover the apparent surface of the array unit 8. In this manner the flow lines of the air impinging on the front of the commercial motor vehicle 1 and deflected upwards and outwards thereof during driving, do not have a direct line of sight into the space between the plurality of elongated vanes 7 and the curved intake air guiding elements 6. As a result the number of water droplets passing through the plurality of elongated vanes 7 into the inside space S of the commercial motor vehicle 1 is decreased.

## Claims

1. Commercial motor vehicle comprising:
- an internal combustion engine;
- an air filter assembly;
- an air intake positioned at the front of the commercial motor vehicle as seen in the normal direction (x) of travel, the air intake being spaced from a center of the front of the commercial motor vehicle when seen in horizontal direction (y) transverse to the normal direction (x) of travel;
- a fire wall extending in a vertical direction (z) transverse to direction of travel (x) and the horizontal direction (y), said fire wall being spaced from and behind the air intake as seen in the normal direction of travel (x);
- an intake air inlet duct for supplying intake air from the air intake to the air filter assembly along an air intake flow direction, the internal combustion engine being provided downstream of the air filter assembly when seen in the air intake flow direction; the intake air inlet duct having an intake air inlet duct opening, said air inlet duct opening being positioned in the space between the fire wall and the air intake, wherein the air intake comprises curved intake air guiding elements arranged for guiding the intake air towards the fire wall in a direction at least substantially away from the intake air inlet duct opening, **characterized in that** a plurality of elongated vanes is arranged in an array unit in front of the curved intake air guiding elements as seen in the normal direction of travel (x), the elongated vanes of the plurality of elongated vanes being configured to be spaced from and arranged parallel to one another in the array unit, and wherein each of the plurality of elongated vanes is elongated in a direction of elongation, which direction of elongation is arranged diagonally under an angle (β) with regard to the vertical direction (z), so that a lower end of each of the plurality of elongated vanes is positioned closer to the center of the front of the commercial motor vehicle than an upper end thereof for guiding intake air along the elongated vanes upwards and in outward direction with regard to the center of the front of the commercial motor vehicle .

2. Commercial vehicle according to claim 1, wherein the array unit comprises a water gutter at an upper edge thereof, so that at least a part of the intake air is guided by the plurality of elongated vanes towards the water gutter.

3. Commercial vehicle according to claim 1 or 2, wherein - seen in a cross section in a plane defined by the direction of travel (x) and the horizontal direction (y) - each of the plurality of elongated vanes has a leading edge positioned further from the center of the front of the commercial motor vehicle than a trailing edge thereof for guiding intake air towards the curved intake air guiding elements, so that - seen in a cross section in a plane defined by the direction of travel (x) and the horizontal direction (y) - each of the plurality of elongated vanes is arranged under an angle (α) with regard to the direction of travel (x).

4. Commercial vehicle according to any one of the preceding claims, wherein each of the plurality of elongated vanes is formed by a plate having substantially flat, straight surfaces.

5. Commercial vehicle according to any one of the preceding claims, wherein as seen in a direction from the center of the front of the commercial motor vehicle outward along a surface of the front of the commercial motor vehicle the plurality of elongated vanes covers the apparent surface of the array unit.

6. Commercial vehicle according to any one of the preceding claims, wherein each of the plurality of elongated vanes has an angled edge at the leading edge thereof, the angled edge being arranged to be in line with a surface of the front of the commercial motor vehicle.

7. Commercial vehicle according to any one of the preceding claims, wherein the angle (β) with regard to the vertical direction (z) has a value between 30 and 45 degrees.

8. Commercial vehicle according to any one of the preceding claims, wherein the angle (α) with regard to the direction of travel (x) has a value between 35 and 55 degrees.
